Europäisches Patentamt

European Patent Office

Office européen des brevets

(11) Publication number: 0 189 862
A2

(12) **EUROPEAN PATENT APPLICATION**

(21) Application number: 86100941.3

(51) Int. Cl.⁴: **G 01 N 30/88**

(22) Date of filing: 24.01.86

(30) Priority: 25.01.85 US 695038

(43) Date of publication of application:
06.08.86 Bulletin 86/32

(84) Designated Contracting States:
DE FR GB

(71) Applicant: THE DOW CHEMICAL COMPANY
2030 Dow Center Abbott Road P.O. Box 1967
Midland, MI 48640(US)

(72) Inventor: Cortes, Hernan J.
2417 Lambros Drive
Midland Michigan 48640(US)

(72) Inventor: Pfeiffer, Curtis D.
5001 Dale Street
Midland Michigan 48640(US)

(72) Inventor: Richter, Bruce E.
3107 Fairlane Street
Midland Michigan 48640(US)

(74) Representative: Weickmann, Heinrich, Dipl.-Ing. et al,
Patentanwälte Dipl.-Ing. H.Weickmann Dipl.-Phys.Dr.
K.Fincke Dipl.-Ing. F.A.Weickmann Dipl.-Chem. B. Huber
Dr.-Ing. H. Liska Dipl.-Phys.Dr. J. Prechtel Möhlstrasse 22
D-8000 München 80(DE)

(54) On-line coupled liquid and gas chromatography system with an interface capillary tube interposed between a pair of capillary chromatograhic columns.

(57) Apparatus and method for on-line coupled liquid chromatography and gas chromatography analysis. The system includes a high-volume, liquid vaporizing chamber, or interface capillary tube which allows injection of a substantial volume of sample-carrying eluent and concentrates bands, obviating adverse effects on the resolution of peak shape of the components of interest. The vaporizing chamber is interposed between a packed or wall-coated open tubular liquid chromatographic column and a gas chromatographic column. The liquid column permits the use of small volumes of eluent and reduced flow rates.

FIG.1.

0189862

ON-LINE COUPLED LIQUID AND GAS
CHROMATOGRAPHY SYSTEM WITH AN INTERFACE
CAPILLARY TUBE INTERPOSED BETWEEN A PAIR OF
CAPILLARY CHROMATOGRAPHIC COLUMNS

The present invention relates to an apparatus and a method for combining high-performance liquid chromatography with capillary gas chromatography. More particularly, the invention is directed to a method and apparatus for on-line coupling of liquid and gas chromatography columns in which there is direct, uninterrupted transfer of sample containing eluent from a liquid chromatographic analytical system to a gas chromatographic system.

In the general area of multi-dimensional chromatography, the introduction of selected fractions from a liquid chromatographic analytical system into a gas chromatographic system has been described. (K. Grob, Jr., et al., J. Chromatography 295, 55-61 (1984)). However, for the most part, such analyses have been carried out utilizing off-line techniques requiring collection and re-injection of the separate fractions, or by on-line procedures using conventional High Performance Liquid Chromatographic columns (HPLC), where only a fraction of the separated peak could be introduced into the gas chromatographic equipment.

Efforts to increase the theoretical efficiency and the speed of analysis in High Performance Liquid Chromatography (HPLC) have been directed to reducing the particle size of the chromatographic stationary phase support to a few microns, using open tubular columns analogous to capillary gas chromatography, and reducing column diameter in microbore and, more recently, using packed capillary columns.

Among the advantages realized in utilizing packed capillary columns for HPLC are the higher total efficiencies obtained by using longer columns, and the reduced eluent consumption. The latter feature permits the use of exotic solvents and the interfacing to detectors such as flame based and mass spectrometers.

The prior art does describe the use of conventional liquid chromatographic columns which have been coupled to gas chromatographic assemblies. However, the relatively fast flow rates (that is, the large volumes) used permit only fractions of a peak to be introduced to the gas chromatographic assembly, or only the characterization of well resolved components, for example, one or two peaks in a mixture.

In spite of the widespread interest in conducting sequential, uninterrupted analyses utilizing the combination, in series, of a liquid chromatographic system followed by a gas chromatographic system, no completely satisfactory apparatus or technique has

0189862

heretofore been achieved. It is, therefore, a principal aim of the present invention to provide an improved apparatus and method whereby the deficiencies and shortcomings of prior art techniques and equipment may be overcome.

A low flow rate liquid chromatography column means a column whose effective operating flow rate allows quantitative transfer of the component(s) of interest into a gas chromatography column through a capillary interface. Low flow rate liquid chromatography columns useful in the invention are generally capillary columns of an inner diameter of about 1 mm or less. Under careful flow conditions it is contemplated that larger columns can be employed for the purposes of the invention, e.g., liquid chromatography columns having an inner diameter of generally about 2 mm or less.

Quantitative transfer means introduction of the total component(s) of interest in the mixture eluting from the liquid chromatography column to the gas chromatography column.

Effective operating flow rates mean a flow rate not greater than that which would not allow effective trapping of the component(s) of interest at the head of the gas chromatography column.

Effective trapping means and is shown by not obtaining detrimental peak shapes, band broadening, or significantly diminished resolution which occurs because of excess eluent volume which carries the component(s) of interest from the interface into the gas chromatography column to an extent that it creates band broadening, diminished resolution, and/or detrimental peak shape shown by excessive nongaussian peak character.

33,354-F

Detrimental peak shape, band broadening and diminished resolution mean those conditions which produce unnecessary merged peaks, unnecessary nongaussian shapes of peaks which are difficult to quantitate, or peaks that are unnecessarily broadened to the point that quantitation at lower levels based, e.g., on peak height, becomes difficult or impossible.

The present invention particularly relates to an on-line, multi-dimensional system in which a high efficient "packed" or "wall-coated" liquid chromatography column (hereinafter referred to as the liquid column) is coupled to a "packed" or "wall-coated" gas chromatographic column (hereinafter referred to as the gas column). It is an important feature of the invention that a "high volumn" vaporizing chamber or interface tube (hereinafter referred to as the vaporizing chamber) is interposed between the output from the liquid column and the input to the gas column. The vaporizing chamber preferably is an uncoated fused silica tube having a length of from 2 to 20 meters and an inner diameter of less than about 3 mm. The gas column preferably is a wall-coated, open-ended tube. The liquid column preferably is a packed capillary open-ended tube.

By "packed"" capillary column, it is meant that the column is filled with chromatographic particles such as silica based, reversed phase supports.

By "wall-coated" columns, it is meant that the inner wall surface of the column is coated or bonded with a stationary phase.

The unique combination of the invention, which includes the liquid column having a relatively small diameter in conjunction with the vaporizing chamber, makes it feasible to utilize relatively small volumes of eluent in the liquid column, the entire volume of which can be introduced into the gas column after partial or total vaporization in the vaporizing chamber.

It is an important advantage of the apparatus and method of the invention that the use of the liquid column permits, in effect, a lower flow rate of sample through the analytical system.

Yet another important feature of the apparatus and method of the invention is that the vaporizing chamber serves to effect an enhanced practical separation of the species of interest which are contained in the effluent from the liquid column.

A related feature of the method of the invention is that the vaporizing chamber and the gas column are enclosed in a heating device such as an oven, the temperature of which is controllable to effect a sequential traverse, first of the eluent and then of the species of interest into the gas column.

It is another feature of the method of the invention that the solvent or eluent vaporizes in the vaporizing chamber and deposits the components of interest in the gas column where these species remain until the temperature is reset or programmed upwardly (after the eluent has passed through the gas column) whereupon the species of interest are concentrated and

33,354-F

separated in the gas column, essentially without any interference from the solvent or eluent.

In the present invention the separation obtainable is markedly improved over what has heretofore been achievable utilizing conventional systems including prior on-line liquid chromatographic and gas chromatographic systems.

Another practical feature of the method and apparatus of the invention is that minor components in a complex matrix can be determined without extensive prior sample clean-up procedures.

A further feature of the invention is that a determination of the presence of specific species of interest in a complex hydrocarbon matrix can be effectively carried out.

It is a particular object of the invention to provide an apparatus for conducting on-line, uninterrupted operation of high performance sequential liquid and gas chromatographic analysis, said apparatus including a liquid chromatography column and a gas chromatography column for separating species of interest contained in a sample aliquot introduced into said liquid column;

a vaporizing chamber interposed between said liquid and said gas columns for facilitating controlled vaporization of eluent present in an effluent delivered from said liqiud column to said vaporization chamber;

33,354-F

heater means for vaporizing the eluent from said liquid column in said vaporizing chamber and for passing the eluent vapor through said gas column, and

analytical means for detecting and recording indicia of species of interest present in a sample aliquot to be analyzed.

It is also an object of the invention to provide a method for conducting an uninterrupted, in-line chromatographic analysis of a sample aliquot containing organic species of interest and employing an analytical system comprising, in combination, a liquid chromatography column and a gas chromatography column, a heater for said gas chromatography column, and detection and display apparatus for providing visual indicia of species of interest present in a sample aliquot to be analyzed, said method comprising the steps of

employing as the liquid column, a packed or wall-coated capillary column and physically connecting the liquid and the gas columns in an in-line communication configuration;

connecting in inter-fluid flow communication with and interposing between said liquid and said gas columns, a vaporizing chamber for receiving a liquid effluent from the liquid column;

retaining in the vaporizing chamber eluent contained in the effluent received from the liquid column;

heating the vaporizing chamber to convert the eluent to a gas and to free species of interest present in the eluent;

vaporizing the species of interest, and

delivering the species to the gas column to effect separation thereof for detection and recordation.

It is a further object of the invention to provide a coupled liquid chromatographic and gas chromatographic analyzer which comprises:

a low flow rate liquid chromatography column, a liquid chromatographic stationary phase supported in said liquid chromatography column, sample injection valve means, and means for forming a stream of a mobile phase and for passing the mobile phase through said injection valve means, said injection means including connector means in fluid flow communication with said liquid chromatography column for adding sample dispersed in the mobile phase to said column;

a flow-through liquid chromatography detector communicating with said column for analyzing a sample in a liquid effluent of the column, switching valve means for directing fluid-flow, said detector having an out feed port communicating with said switching valve means;

an interface capillary tube, said tube being relatively nonretentive of the mobile phase and having a bore of an inner diameter no greater than about 1 mm, said switching valve means including means communicating with said interface capillary tube for passing selected, prior analyzed fractions of sample in the mobile phase to said interface capillary tube;

a gas chromatography column and means connecting said gas chromatography column with said interface capillary tube for fluid flow communication therewith, a gas chromatography stationary phase supported in said gas chromatography column, and heating means for heating said interface capillary tube and said gas chromatography column to affect volatilization of the mobile phase, said heating means being a.variable temperature heating means for subsequently eluting the sample:

means for delivering a carrier gas stream to said interface capillary tube and for passing the carrier gas stream through said interface capillary tube and ultimately through said gas chromatography column to elute the sample, and a gas chromatography detector means for analyzing the sample in an effluent of said gas chromatography column.

33,354-F                    -8a-

0189862

Other features, advantages, and objects of the present invention will be evident from the following detailed description of the invention when considered in conjunction with the drawings.

Figure 1 is a schematic representation of an embodiment of the apparatus of the invention;

Figure 2 is a chromatogram obtained in a conventional high performance liquid chromatographic system, indicating the type of resolution obtainable using a coal tar sample with 100 percent acetonitrile as the mobile phase;

Figure 3 is a chromatogram in which polychlorinated biphenyls have been elutriated with components of a coal tar mixture, and analyzed using the apparatus and method of the present invention;

Figure 4 represents a chromatogram obtained upon injection of a 10 microliter (μl) aliquot of a coal tar sample into the gas column of the apparatus of the invention;

Figure 5 is a chromatogram similar to that of Figure 4 but of a sample which included polychlorinated biphenyls, and indicating that the polychlorinated biphenyls co-elute with various components of the coal tar mixture in the gas column;

Figure 6 is a chromatogram of a selected portion of the liquid column effluent known to contain the components of interest and introduced into the gas column of the apparatus of the invention; and

33,354-F

Figure 7 is a chromatogram of the coal tar fraction shown in Figure 6, but containing as well the polychlorinated biphenyls not included in chromatogram of Figure 6.

The aims and objects of the invention are accomplished by providing an on-line High Performance Liquid Chromatography (HPLC) system coupled to a gas chromatographic system employing a "packed" or "wall-coated" liquid chromatographic column in conjunction with a vaporizing chamber or interface capillary tube. The liquid column permits use of small volumes of eluent and of reduced flow rates. The vaporizing chamber allows the injection of a substantial volume of sample-carrying eluent and concentrates the bands of the species of interest obviating adverse effects on the resolution or peak shape of the components of interest. The vaporizing chamber is interposed between the liquid and the gas columns.

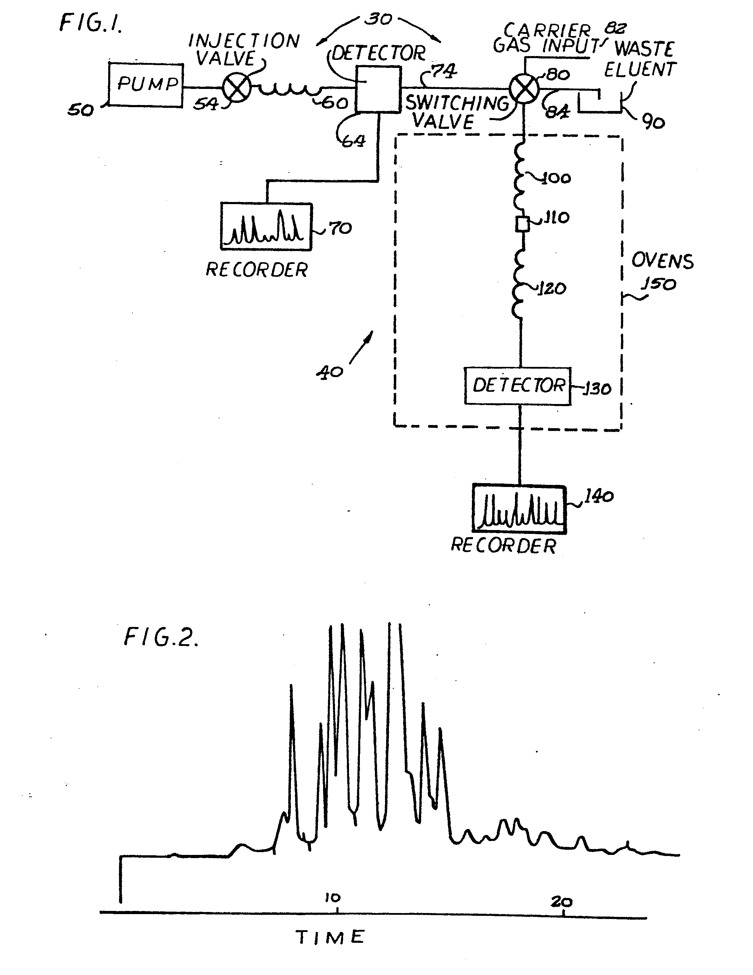

Referring to Figure 1, there is shown a block diagram of a chromatography system comprising a liquid chromatography section 30 and a gas chromatography section 40. The liquid chromatography section 30 includes a pump 50 connected through a sample injection valve 54 to a liquid chromatography column 60. The effluent from the liquid column 60 is connected to a detector 64 which is connected in turn to recording apparatus 70. The detector 64 is connected through a suitable conduit 74 to a switching valve 80 from which an aliquot of the effluent from the detector is directed to the gas chromatography section 40. A gas carrier stream 82 is also introduced into the system through switching valve 80. A suitable conduit 84 is provided to direct excess effluent to waste 90.

The gas chromatography section 40 includes an interface capillary tube, or vaporizing chamber 100 which receives the sample aliquot from the switching valve 80. The vaporizing chamber 100 is connected by means of a connector 110 which is preferably glass lined, to a gas chromatography capillary column 120, the latter being connected to a detector 130, and the detector to a recorder 140. With the exception of the recorder 140, the components of the gas chromatography system are housed within a temperature controlling oven 150 which is initially set at a predetermined temperature for vaporization of the liquid eluent from the liquid column.

The method of the invention, described briefly with reference to Figure 1 will now be readily understood. A sample to be studied or investigated is introduced into the eluent flow system through the injection valve 54 and thereupon proceeds into the liquid column 60 which uses a relatively small volume of eluent and also facilitates a marked reduction in the rate of flow or throughput. The effluent from the liquid column is detected in the detector 64 and recorded in the recorder 70 in a manner well known in the art.

However, rather than terminating the analytical procedure at this stage, the eluent containing the species of interest is directed from the detector 64, through the switching valve 80 to the vaporizing chamber 100 in which the liquid eluent is transformed into a vapor which then passes through the connector 110 into the gas column 120 where the species of interest are "retained." With the major portion of the eluent vaporized and discharged, the temperature of the oven is then reset (raised) to vaporize the species of interest which thereupon migrate through the gas column and are separated in accordance with known techniques. The species of interest are thus detected in the detector 130 and recorded by the recorder 140.

It will be appreciated that the apparatus and method described obviates the undesirable interference and related problems which a relatively substantial quantity of eluent poses in carrying out analyses of the type described. The overall result of the method and apparatus of the invention is to achieve low flow rates allowing the loading of entire portions of the liquid column effluent into the gas column. The utilization of the vaporizing chamber permits the injection of several microliters without the usual adverse effects upon the resolution or peak shape of the components of interest.

An additional advantageous feature of the apparatus and method of the invention is that the liquid column acts effectively as a highly efficient clean-up or chemical class fractionation stage prior to introduction of the sample into the gas column, thus significantly reducing sample preparation time for many applications. It has been effectively demonstrated that the on-line, multi-dimensional high resolution liquid gas chromatography system of the invention is markedly superior to what is achievable using either liquid chromatography or gas chromatogrphay alone. The techniques of the

33,354-F

invention are particularly suited to the determination of trace levels of contaminants in extremely complex matrices. With the inclusion of valve actuators and auto samplers, the system of the invention becomes totally automated.

Details of the experimental procedure and the apparatus used are set forth in the paragraphs below.

Experimental

The liquid chromatography system used consisted of a Jasco Uvidec II detector equipped with a modified cell whose illuminated volume was calculated from the capillary diameter and the slit size. Wavelengths used were 254 nanometers (nm) for evaluation and 220 nm for sample analysis at 0.01 to 0.04 absorbance units, full scale, (AUFS). Injections were made using a Valco model NI4W injection valve (Valco Inst., Houston, Texas, U.S.A.). Injection volumes varied between 60 and 200 nanoliters (nl). The solvent delivery system consisted of a Waters model M-45 pump equipped with a micro flow module, which allowed flow rates ranging from 1 microliter per minute ($\mu$l/min.) to 10 $\mu$l/min. The recorder used was a Sargent model XKR at 10 millivolt (mv) full scale.

The chromatography columns were constructed of fused silica tubes, capillaries having internal diameters of 100 micrometer (um), 250 um (Spectran Corp., Sturbridge, MA, U.S.A.) and 320 um (Hewlett Packard Co., Avondale, PA, U.S.A.). Column lengths ranged from 75 cm to 110 cm. The columns were packed at a pressure of 41370 kPa (6000 psi) using a slurry technique.

Chromatographic supports used were Zorbax ODS, particle diameter (dp) = 7 um (DuPont Inst., Willmington, DE, U.S.A.), ODS-Hypersil, dp = 5 um (Shandon Southern Products, Ltd., Cheshire, England), and Spherisorb ODS, dp = 10 um (Phase Sep, Hauppauage, N.Y., U.S.A.).

Test mixtures used to evaluate the liquid chromatography system and to establish elution orders contained ammonium nitrate, phenol, methyl benzoate and acetophenone, prepared by dissolving about 100 mg of the organics and about 500 mg of ammonium nitrate, used as a marker to determine column void volumes, in 50 percent acetonitrile-water. The mobile phase used for evaluation purposes was 75 percent acetonitrile-water.

The gas chromatography system consisted of a Hewlett Packard model 5790 system equipped with a flame ionization detector.

Connection of the liquid chromatography equipment to the gas chromatography equipment was made through a switching valve 80 (Valco model 4NI10WT) to keep the dead volume to a minimum. The valve was installed outside of the oven. An inlet section of the tubing free of stationary phase, i.e. the vaporizing chamber 100, was connected between the switching valve 80 and the gas column. The vaporizing chamber 100, as previously described, effectively focused the components of interest at the head of the gas column 120. A glass-lined stainless steel connector 110 (Scientific Glass Engineering, Inc., Austin, TX, U.S.A.) was used to couple the vaporizing chamber 100 to the gas column 120 with essentially no "dead volume".

-14-

33,354-F

The gas column used was a 30 meter, 0.25 mm inside diameter (I.D.) column coated with Supelcowax 10 of 0.25 um thickness (made by Supelco, Inc., of Bellefonte, PA, U.S.A.). The carrier gas was helium at a linear velocity of 68 cm/sec. Nitrogen at a flow rate of 30 ml/min was used as the make-up gas for the flame ionization detector 130, operated at 265°C. The temperature of the oven 150 was maintained at 115°C for seven minutes, followed by a gradual temperature increase to 245°C at 5°C per minute.

The maximum detector cell volume for a packed capillary system that does not significantly contribute to system band broadening is defined by the formula

$$Vd = 0.18 \sqrt{Ldp\ dc}$$

where L = column length, dp = particle diameter, and dc = inside tube diameter. For a 75 cm column of 250 um I.D. packed with 7 um particles, the maximum detector volume would be 27 nl.

Although column efficiency does not appear to depend upon column diameter in packed systems, fluctuations in packing density which may occur over the column diameter and temperature gradients generated due to viscous friction may contribute to band broadening which can be minimized by decreasing the column inside diameter.

The theoretical limit in terms of plate height of a packed column chromatography system has been described as being equivalent to two times the particle diameter. Plate height is determined by the

0189862

formula

$$H = \frac{L}{N}$$

where H is the plate height; L is the length of the column, and N is the number of plates. N is determined by the formula:

$$N = 5.52 \left( \frac{tr}{W_{b-1/2}} \right)^2$$

where tr is the retention time and $W_{b-1/2}$ is the peak width at half height. In the work conducted and reported herein, the plate heights range from 2.6 times particle diameter (10 um) to 3.4 times particle diameter (5 um) at the lower linear velocities which were employed.

Example

A sample of coal tar analyzed by HPLC as described hereinabove using a mobile phase of 100 percent acetonitrile.

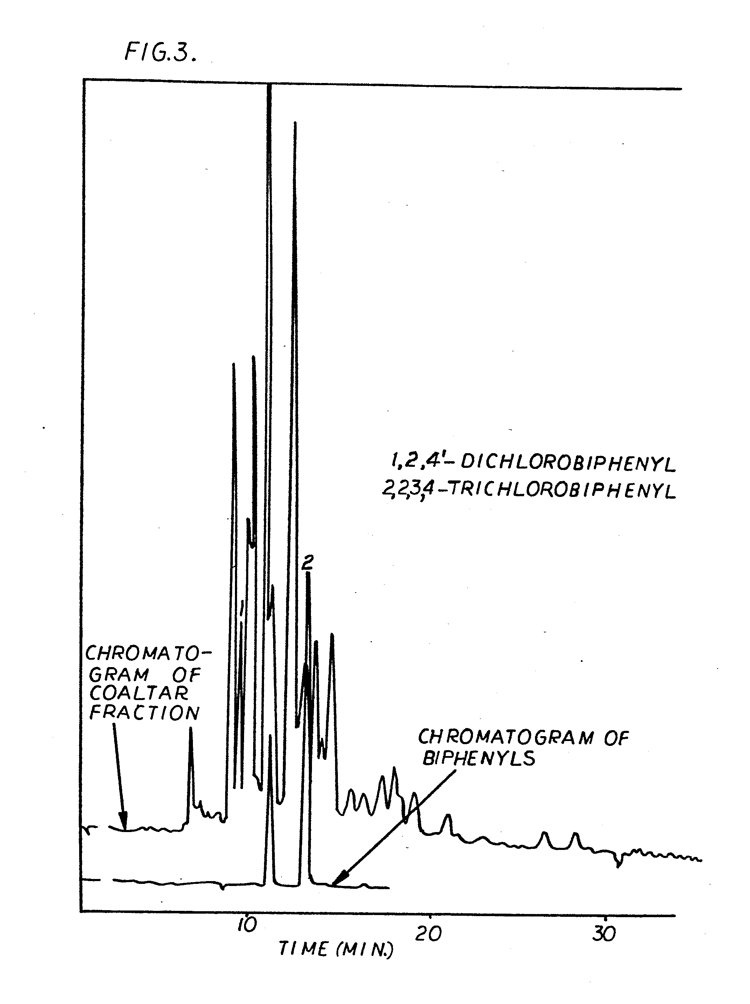

A chromatogram obtained utilizing a conventional HPLC system is included herein as Figure 2. This chromatogram should be compared with that of Figure 3 in which the system of the invention was employed.

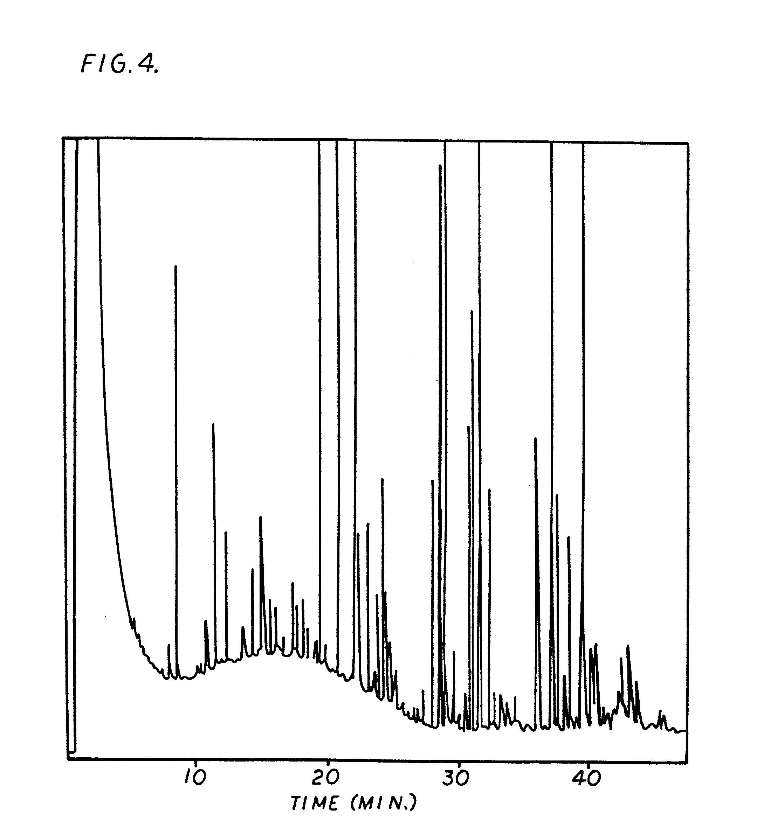

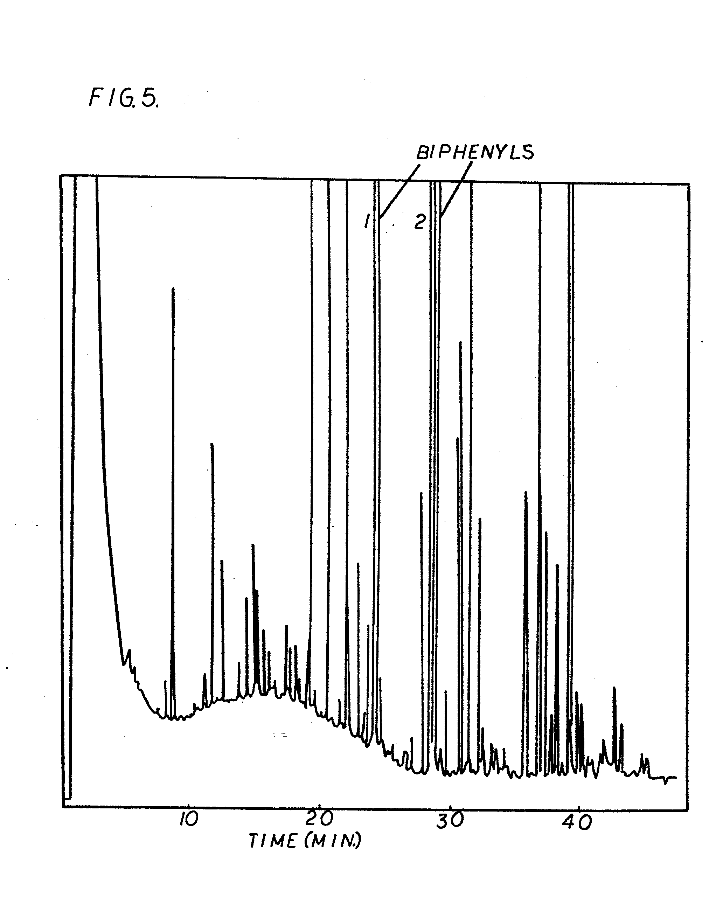

A 10 ul injection of a coal tar sample and a coal tar sample containing the polychlorinated biphenyls (species of interest) produced the chromatograms depicted in Figures 4 and 5. As clearly indicated, the polychlorinated biphenyls elute with various components of the coal tar mixture in the gas chromatographic system.

33,354-F

0189862

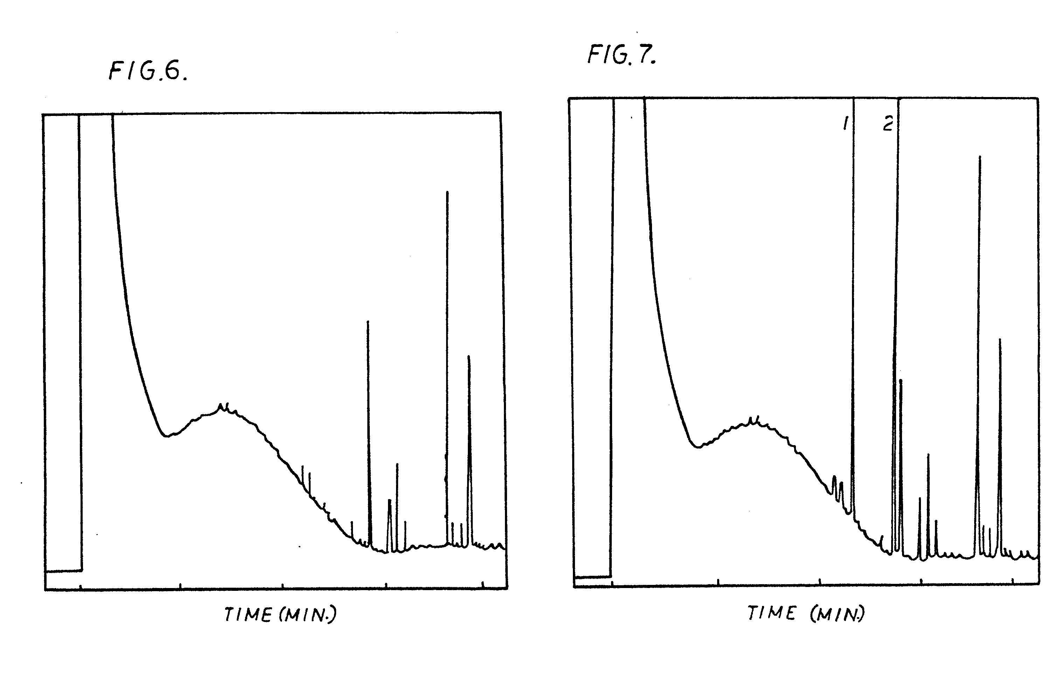

The liquid chromatographic system was then connected to the switching valve 80 and the selected portion of the liquid column effluent known to contain the components of interest was introduced into the gas chromatographic section. Figure 6 represents a chromatogram using the combined liquid and gas chromatographic systems of the invention and carried out on a coal tar mixture that did not contain the polychlorinated biphenyls, while Figure 7 represents a chromatogram of coal tar containing the polychlorinated biphenyls of interest.

The volume injected into the gas chromatography system was about 40 ul. The use of a vaporizing chamber, in accordance with the invention, allowed this quantity of polar eluent to be injected without any detrimental effects on the shapes of the peaks of interest. It is evident upon comparison of Figures 6 and 7 that the poly-chlorinated biphenyls of interest are effectively resolved from all other components in the coal tar matrix, indicating the superiority of the multi-dimensional approach of the invention to either liquid or to gas chromatography alone, and the superiority of the present invention over prior on-line combination systems.

It will be appreciated from the foregoing disclosure that there is herein provided a multi-dimensional chromatographic system for effectively coupling a liquid column to a gas column. The typical low flow rates of the liquid chromatographic system allows the loading of entire portions of the column effluent into the gas chromatographic system. The use of a vaporizing chamber allows injection of several microliters without adverse effects upon the resolution of peak shape of the components of interest.

While a particular preferred embodiment of the invention has been shown and described, it will be obvious to those skilled in the art that changes and modifications may be made without departing from the invention in its broader aspects. Therefore, the aim of the appended claims is to cover such changes and modifications as fall within the true spirit and scope of the invention.

33,354-F

1. An apparatus for conducting on-line, uninterrupted operation of high performance sequential liquid and gas chromatographic analysis, said apparatus including

a liquid chromatography column and a gas chromatography column for separating species of interest contained in a sample aliquot introduced into said liquid column;

a vaporizing chamber interposed between said liquid and said gas columns for facilitating controlled vaporization of eluent present in an effluent delivered from said liquid column to said vaporization chamber;

heater means for vaporizing the eluent from said liquid column in said vaporizing chamber and for passing the eluent vapor through said gas column, and

analytical means for detecting and recording indicia of species of interest present in a sample aliquot to be analyzed.

2. The apparatus of Claim 1 wherein said vaporizing chamber comprises an elongated capillary conduit.

3. The apparatus of Claim 1 or 2, wherein said liquid and gas columns are packed or wall-coated capillary tubes having an inside diameter of less than 3 mm.

4. The apparatus of Claim 3, wherein said liquid column has an inside diameter of from 1 micrometer to 1 mm, and said gas column has an inside diameter of from 10 micrometers to 1 mm.

5. The apparatus of any one of the preceding claims, wherein said vaporizing chamber is an uncoated fused silica tube.

6. The apparatus of Claim 5, wherein said silica tube has a length of less than 20 meters and an inside diameter of less than 3 mm.

7. The apparatus of Claim 6, wherein said silica tube has a length of from 2 to 20 meters and an inside diameter of from 10 micrometers to 1 mm.

8. The apparatus of any one of the preceding claims, including

a stationary phase supported in said liquid column, a sample injection valve, and means for supplying a stream of a mobile phase and for passing the mobile phase through said injection valve, said injection valve being in fluid flow communication with said liquid column for adding said sample dispersed in the mobile phase to said capillary liquid column;

said analytical means comprising a flow-through detector communicating with said liquid column for analyzing the sample in the liquid effluent of the

33,354-F                    --20--

column, said detector having an outlet port in communication with a switching valve;

said vaporizing chamber comprising an interface capillary tube which is non-retentive of the mobile phase, said switching valve being in communication with said interface capillary tube for passing selected, prior analyzed fractions of the sample in the mobile phase from the liquid column to said interface capillary tube;

means connecting said gas column with said interface capillary tube for fluid flow communication therewith, a gas chromatography stationary phase supported in said gas column, and

means for delivering and for passing a carrier gas stream through said interface capillary tube and ultimately through said gas column to elute the sample, and said analytical means also comprising a gas chromatography detector for analyzing the sample in the effluent of said gas column.

9. The apparatus of any one of the preceding claims, wherein said heating means is a variable temperature heater for heating said interface capillary tube and said gas column to affect volatilization of the mobile phase.

10. A method for conducting an uninterrupted, in-line chromatographic analysis of a sample aliquot containing organic species of interest and employing an analytical system comprising, in combination, a liquid chromatography column and a gas chromatography column, a heater for said gas chromatography column, and detection and display apparatus for providing visual indicia of species of interest present in a sample aliquot to be analyzed, said method comprising the steps of

employing as the liquid column, a packed or wall-coated capillary column and physically connecting the liquid and the gas columns in an in-line communication configuration;

connecting in inter-fluid flow communication with and interposing between said liquid and said gas columns a vaporizing chamber for receiving a liquid effluent from the liquid column;

retaining in the vaporizing chamber eluent contained in the effluent received from the liquid column;

heating the vaporizing chamber to convert the eluent to a gas and to free species of interest present in the eluent;

vaporizing the species of interest, and

delivering the species to the gas column to effect separation thereof for detection and recordation.

FIG.1.

FIG.2.

TIME

FIG.3.

1,2,4'- DICHLOROBIPHENYL
2,2,3,4 -TRICHLOROBIPHENYL

CHROMATO-
GRAM OF
COALTAR
FRACTION

CHROMATOGRAM OF
BIPHENYLS

TIME (MIN.)

0189862

FIG.4.

TIME (MIN.)

FIG. 5.

BIPHENYLS

TIME (MIN.)

FIG.6.

TIME (MIN.)

FIG.7.

TIME (MIN.)

0189862